# EUROPEAN PATENT APPLICATION

(11) **EP 4 507 067 A1**
(43) Date of publication of application: **12.02.2025**
(21) Application number: 23913939.7
(22) Date of filing: 03.01.2023
(51) Int. Cl.: H01M 10/613

(54) **BOX BODY, BATTERY AND ELECTRICAL APPARATUS**

(71) Applicant: Contemporary Amperex Technology Co., Limited, Ningde, Fujian 352100 (CN)
(72) Inventor: GUO, Yong, Ningde, Fujian 352100 (CN); WANG, Zengzhong, Ningde, Fujian 352100 (CN); PENG, Haoran, Ningde, Fujian 352100 (CN)
(74) Representative: Frick, Robert
(86) International application number: PCT/CN2023/070208
(87) International publication number: WO 2024/145779

(57) **Abstract**

This application discloses a box (10), a battery, and an electrical apparatus. The box (10) includes a box body (11) and a heat dissipation assembly (12). A cavity (111) is provided inside the box body (11). The heat dissipation assembly (12) includes a heat dissipation plate (121) arranged inside the cavity (111), and a heat dissipation fin (122) arranged on a side of the heat dissipation plate (121) away from the cavity (111), the heat dissipation fin (122) intersecting with the heat dissipation plate (121). The box (10) can greatly increase a heat exchange area between the box (10) and the air through the heat dissipation plate (121) and the heat dissipation fin (122), thereby enhancing the heat dissipation performance of the box (10). It can also ensure that the heat dissipation assembly (12) has sufficient structural strength and rigidity, making the heat dissipation assembly (12) less prone to damage throughout the lifecycle of the battery and thereby ensuring that the heat dissipation performance of the box (10) remains consistently stable and reliable throughout the lifecycle of the battery.

## Description

### TECHNICAL FIELD

This application relates to the field of battery technologies, and specifically to a box, a battery, and an electrical apparatus.

### BACKGROUND

In some cases, the outside of a box is spray-coated with a heat dissipation layer, where the heat dissipation layer includes a phase change material layer and a heat dissipation oil film layer arranged on the outside of the phase change material layer. In practical use scenarios, the phase change material layer can actively absorb heat from inside the box and transfer it to the heat dissipation oil film layer, thereby achieving the diffusion of heat to the external environment for cooling. However, the phase change material layer is prone to damage, leading to a reduction in heat dissipation performance.

### TECHNICAL PROBLEM

The embodiments of this application provide a box, a battery, and an electrical apparatus, aiming to solve the problem of easily reduced heat dissipation performance.

### TECHNICAL SOLUTIONS

The technical solutions used in the embodiments of this application are as follows.

According to a first aspect, a box is provided, where the box includes:
a box body, where a cavity is provided inside the box body; and
a heat dissipation assembly, where the heat dissipation assembly includes a heat dissipation plate arranged inside the cavity, and a heat dissipation fin arranged on a side of the heat dissipation plate away from the cavity, the heat dissipation fin intersecting with the heat dissipation plate.

The box provided in the embodiments of this application can accommodate one or more battery cells through the cavity of the box body. When the battery cells accommodated in the cavity generate heat during the charge and discharge process, the heat dissipation plate arranged in the cavity can come into contact with the battery cells so that the heat dissipation plate exchanges heat with the battery cells that it comes into contact with and diffuses heat to the heat dissipation fin, thereby greatly increasing the heat exchange area between the box and the air. This facilitates the heat dissipation plate and heat dissipation fin in transferring and diffusing heat into the air. Thus, the heat dissipation performance of the box provided by the embodiments of this application can be effectively ensured and improved. Moreover, the heat dissipation assembly provided by the embodiments of this application, which is designed based on the above structure, will have certain structural strength and rigidity, and will not be easily damaged throughout the lifecycle of the battery, thereby effectively ensuring that the heat dissipation performance of the box can remain stable and reliable throughout the entire lifecycle of the battery.

In some embodiments, the heat dissipation fin extends in a straight line.

The employment of the above solution on the one hand facilitates the processing of the heat dissipation fin and is conducive to simplifying and optimizing the overall structural design of the heat dissipation fin and the heat dissipation plate; on the other hand, the straight sides of the heat dissipation fin can guide the air to flow smoothly along them, thereby facilitating reliable and effective heat exchange between the straight sides of the heat dissipation fin and the air, which helps ensure and improve the heat dissipation performance of the heat dissipation assembly and the box.

In some embodiments, the heat dissipation fin extends in a curved line.

The employment of the above solution on the one hand facilitates the diversification of the shape of the heat dissipation fin and helps enrich and diversify the overall structural design of the heat dissipation fin and the heat dissipation plate; on the other hand, the curved sides of the heat dissipation fin can create a certain turbulence effect on the air flowing through it, thereby relatively reducing the speed of flow of the air when it passes through the heat dissipation fin and relatively increasing the residence time of the air when it passes through the heat dissipation fin, thus facilitating sufficient and reliable heat exchange between the heat dissipation fin and the air, which helps ensure and improve the heat dissipation performance of the heat dissipation assembly and the box.

In some embodiments, the heat dissipation fins are provided in plurality, and the plurality of heat dissipation fins are spaced apart along a first direction, forming a heat dissipation channel between two adjacent heat dissipation fins.

When the above solution is employed, a plurality of heat dissipation fins can be provided on the outer side of the heat dissipation plate. Based on this, the heat exchange area between the heat dissipation assembly and the box with the air can be effectively increased. Specifically, a gap between adjacent heat dissipation fins can form a multi-side open heat dissipation channel, facilitating air circulation within the heat dissipation channel. This allows the heat dissipation plate and the heat dissipation fins to exchange heat with the air flowing through the heat dissipation channel, thereby effectively improving the heat dissipation performance of the box.

In some embodiments, the plurality of heat dissipation fins are arranged parallel to each other.

When the above solution is employed, on the one hand, the layout of the heat dissipation fins on the side of the heat dissipation plate away from the cavity can be effectively balanced and optimized, thereby strengthening the overall structural strength and rigidity of the heat dissipation assembly and optimizing the overall heat dissipation performance of the heat dissipation assembly; on the other hand, the width of the heat dissipation channel formed between two adjacent heat dissipation fins can remain basically consistent in the extension direction of the heat dissipation fins. Based on this, it can be ensured that when the air flows in the heat dissipation channel, any region of the heat dissipation channel will not generate a convergence or divergence effect on the air, thus basically balancing the flow speed of the air when it flows in each region of the heat dissipation channel, which helps ensure and balance the heat dissipation performance of the heat dissipation channel and thus helps ensure and improve the heat dissipation performance of the heat dissipation assembly and the box.

In some embodiments, the plurality of heat dissipation fins are spaced apart at equal intervals along the first direction.

When the above solution is employed, a gap between any two adjacent heat dissipation fins is the same as a gap between any other two adjacent heat dissipation fins, ensuring that a size of a heat dissipation channel formed between any two adjacent heat dissipation fins is basically consistent with a size of a heat dissipation channel formed between any other two adjacent heat dissipation fins. Based on this, the airflow conditions in the heat dissipation channels can be relatively balanced, thus relatively balancing the heat exchange effects of the heat dissipation plate regions and the heat dissipation fin regions corresponding to the heat dissipation channels, and achieving relatively balanced heat dissipation performance of the regions of the heat dissipation assembly. This effectively reduces the risk of heat accumulation in a local region of the heat dissipation assembly due to poor heat dissipation in that region.

In some embodiments, the heat dissipation fins are provided in plurality, and the heat dissipation fins intersect vertically and horizontally to form a plurality of cells, each cell forming a heat dissipation channel.

When the above solution is employed, on the one hand, mutual connection and support of the heat dissipation fins can be implemented by enabling the heat dissipation fins to intersect vertically and horizontally, which can effectively strengthen the overall structural strength and rigidity of the heat dissipation assembly, thereby reducing the risk of damage to the heat dissipation assembly throughout the lifecycle of the battery, and consequently, ensuring and extending the lifespan of the heat dissipation assembly and ensuring stable and reliable heat dissipation performance of the box throughout the lifecycle of the battery; on the other hand, the plurality of cells formed by the vertical and horizontal intersections of the heat dissipation fins each create a single-side open heat dissipation channel, which greatly increases the heat exchange area between the heat dissipation fins and the air, thereby facilitating heat exchange between the heat dissipation plate and heat dissipation fins and the air flowing in the heat dissipation channels, and effectively ensuring and improving the heat dissipation performance of the box.

In some embodiments, a surface of the heat dissipation plate on a side close to the cavity is provided with a thermally conductive adhesive.

When the above solution is employed, the surface of the heat dissipation plate on the side close to the cavity can come into abutting contact with the battery cells accommodated in the cavity through the thermally conductive adhesive. Based on this, when the battery cells accommodated in the cavity generate heat during the charge and discharge process, the thermally conductive adhesive in abutting contact with the battery cells can efficiently and reliably conduct the heat generated by the battery cells to the heat dissipation plate, thereby improving the heat transfer efficiency. Thus, the heat dissipation performance of the box can be effectively ensured and improved.

In some embodiments, the heat dissipation plate includes a plurality of heat dissipation sub-plates, the heat dissipation sub-plates are arranged in a matrix and interconnected to form the heat dissipation plate.

When the above solution is employed, the heat dissipation sub-plates each can be individually formed, then the heat dissipation sub-plates can be arranged in a matrix in a desired shape, and then the abutting edges between adjacent heat dissipation sub-plates can be connected, thereby conveniently and quickly assembling and forming the heat dissipation plate in the desired shape. Thus, the processing convenience and processing efficiency of the heat dissipation plate can be effectively ensured and improved. This is especially suitable for the processing and forming of large heat dissipation plates.

In some embodiments, adjacent heat dissipation sub-plates are connected by welding.

When the above solution is employed, while facilitating the processing and forming of large heat dissipation plates, the welding connection between adjacent heat dissipation sub-plates can relatively ensure and improve the connection stability between adjacent heat dissipation sub-plates, thereby relatively ensuring and improving the overall structural strength and rigidity of the heat dissipation plate.

In some embodiments, the box body includes a first box body and a second box body, the second box body is connected to one end of the first box body and intersects with the first box body, and the heat dissipation assembly is arranged on a surface of the second box body on a side close to the cavity.

When the above solution is employed, while ensuring the utility of the box body, a surface of the second box body close to the cavity can reliably support the heat dissipation assembly, even firmly connected to the heat dissipation assembly, achieving convenient and quick stabilization of the installation location and installation state of the heat dissipation assembly relative to the box body, thereby effectively ensuring and improving the installation convenience and installation reliability of the heat dissipation assembly. Moreover, the arrangement of the heat dissipation assembly on the surface of the second box body on the side close to the cavity can further enable the heat dissipation assembly, especially the heat dissipation plate, to be arranged inside the cavity, thereby facilitating the heat dissipation plate to be in abutting contact with one or more battery cells accommodated in the cavity and exchange heat with the battery cells in contact with it.

In some embodiments, the heat dissipation assembly further includes a protective strip correspondingly disposed on a side of the heat dissipation fin away from the heat dissipation plate, the protective strip intersecting with the heat dissipation fin.

When the above solution is employed, the protective strip can be used to protect the heat dissipation fin accordingly to reduce the risk of direct external impact on the heat dissipation fin, thereby effectively reducing the risk of damage to the heat dissipation assembly throughout the lifecycle of the battery. This can ensure and extend the lifespan of the heat dissipation assembly, and ensure the stable and reliable heat dissipation performance of the box throughout the lifecycle of the battery.

In some embodiments, surfaces of the protective strips away from the heat dissipation plate are on the same plane.

When the above solution is employed, when an external object may come into contact with or even impact the heat dissipation assembly, the surfaces of the plurality of protective strips away from the heat dissipation plate can collectively come into contact with and support the external object, achieving a combined protective effect of the plurality of protective strips. This reliably reduces the risk of external objects directly impacting the heat dissipation fins and thus reliably reduces the risk of damage to the heat dissipation assembly throughout the lifecycle of the battery, ensuring and extending the lifespan of the heat dissipation assembly, and ensuring the stable and reliable heat dissipation performance of the box throughout the lifecycle of the battery.

According to a second aspect, a battery is provided, where the battery includes the above box.

When the above solution is employed, the battery can use the box provided in the embodiments of this application, ensuring and improving the heat dissipation performance of the battery, and thereby effectively ensuring and improving the charge and discharge capacity and safety of the battery.

According to a third aspect, an electrical apparatus is provided, where the electrical apparatus includes the above box or the above battery.

When the above solution is employed, the electrical apparatus can use the box or the battery provided in the embodiments of this application, ensuring and improving the safety of the electrical apparatus.

### BENEFICIAL EFFECTS

### DESCRIPTION OF DRAWINGS

To describe the technical solutions in the embodiments of this application more clearly, the following briefly describes the accompanying drawings required for describing some embodiments of this application or example technologies. Apparently, the accompanying drawings in the following description show only some embodiments of this application, and persons of ordinary skill in the art may still derive other drawings from these accompanying drawings without creative efforts.
FIG. 1 is a local perspective view of the box provided in an embodiment of this application;
FIG. 2 is a top view of the box provided in FIG. 1;
FIG. 3 is a partial schematic structural diagram of the box provided in FIG. 1;
FIG. 4 is an enlarged view of area A provided in FIG. 3;
FIG. 5 is a top view of the box provided in another embodiment of this application, where the heat dissipation fins each extend in a curved line;
FIG. 6 is a top view of the box provided in another embodiment of this application, where the heat dissipation fins intersect vertically and horizontally to form a plurality of cells; and
FIG. 7 is a local schematic diagram of the box provided in another embodiment of this application, where the heat dissipation assembly includes a protective strip correspondingly disposed on a side of the heat dissipation fin away from the heat dissipation plate.

Reference signs in the figures:
10 - box; 11 - box body; 111 - cavity; 112 - first box body; 113 - second box body; 12 - heat dissipation assembly; 121 - heat dissipation plate; 1211 - heat dissipation sub-plate; 122 - heat dissipation fin; 123 - heat dissipation channel; 124 - protective strip; and 13 - thermally conductive adhesive.

### DESCRIPTION OF EMBODIMENTS OF THE PRESENT INVENTION

To make the technical problem to be resolved, technical solutions, and beneficial effects of this application clearer and more comprehensible, the following describes this application in detail with reference to the accompanying drawings and embodiments. It should be understood that the specific embodiments described herein are merely used to explain this application but are not intended to limit this application.

In the descriptions of this application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. In the description of this application, "a plurality of" means two or more unless otherwise specifically stated.

In the description of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

In this application, a battery is a modular structure that includes one or more battery cells to provide higher voltage and capacity, for example, it may be a battery module, a battery group, or a battery pack. In some cases, the battery generally includes a box for packaging one or more battery cells. The box can provide dustproof, waterproof, and protective functions for the one or more battery cells accommodated in it, reducing the impact of external liquids or other foreign objects on the charging and discharging of the battery cells, and effectively ensuring and extending the lifespan of the battery. The battery cells may include but are not limited to lithium-ion secondary batteries, lithium-ion primary batteries, lithium-sulfur batteries, sodium-lithium ion batteries, sodium ion batteries, or magnesium ion batteries.

In actual use scenarios of the battery, the battery cells contained in the box will continuously generate heat during the charge and discharge process. If the heat accumulates, causing the temperature of the battery cells to become too high, the battery is prone to thermal runaway, bulging, explosion, and other safety hazards. Therefore, ensuring and improving the heat dissipation performance of the battery is one of the keys to ensuring the charge and discharge capacity and safety of the battery.

In response to this, in some cases, the outside of a box is spray-coated with a heat dissipation layer, where the heat dissipation layer includes a phase change material layer and a heat dissipation oil film layer arranged on the outside of the phase change material layer. Based on this, in actual use scenarios, the phase change material layer can actively absorb heat from inside the box and transfer it to the heat dissipation oil film layer, thereby achieving the diffusion of heat to the external environment for cooling. However, since the phase change material layer is a coating arranged on an outer surface of the box, it is prone to damage over the lifecycle of the battery, leading to a reduction in heat dissipation performance.

Therefore, some embodiments of this application provide a box, where the box can implement the accommodation of one or more battery cells through the cavity of the box body. When the battery cells accommodated in the cavity generate heat during the charge and discharge process, the heat dissipation plate arranged in the cavity can come into contact with the battery cells so that the heat dissipation plate exchanges heat with the battery cells that it comes into contact with and diffuses heat to the heat dissipation fin, thereby greatly increasing the heat exchange area between the box and the air. This facilitates the heat dissipation plate and heat dissipation fin in transferring and diffusing heat into the air. Thus, the heat dissipation performance of the box provided by the embodiments of this application can be effectively ensured and improved. Moreover, the heat dissipation assembly provided by the embodiments of this application, which is designed based on the above structure, will have certain structural strength and rigidity, and will not be easily damaged throughout the lifecycle of the battery, thereby effectively ensuring that the heat dissipation performance of the box can remain stable and reliable throughout the entire lifecycle of the battery.

The box provided in the embodiments of the application is suitable for batteries and electrical apparatuses using batteries. The electrical apparatus may be a vehicle, a mobile phone, a portable device, a notebook computer, a ship, a spacecraft, an electric toy, an electric tool, and the like. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric vehicle toy, an electric ship toy, an electric airplane toy, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like. The type of the electrical apparatus is not limited in this embodiment.

The following describes in detail the technical solutions provided in this application with reference to the specific accompanying drawings and embodiments.

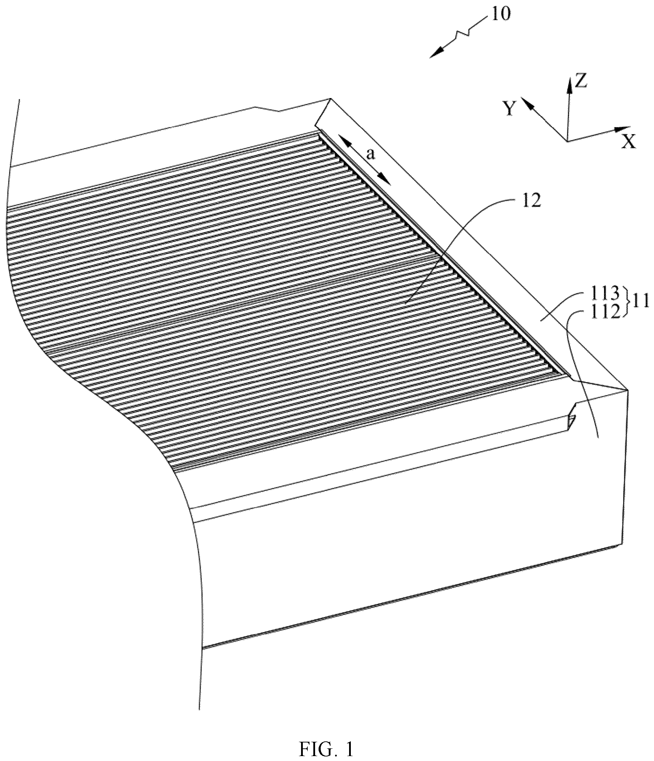

Referring to FIG. 1, FIG. 2, FIG. 3, and FIG. 4, some embodiments of this application provide a box 10, where the box 10 includes a box body 11 and a heat dissipation assembly 12. A cavity 111 is provided inside the box body 11. The heat dissipation assembly 12 includes a heat dissipation plate 121 arranged inside the cavity 111, and a heat dissipation fin 122 arranged on a side of the heat dissipation plate 121 away from the cavity 111, the heat dissipation fin 122 intersecting with the heat dissipation plate 121.

It should be noted that the box body 11 is a main component of the box 10. The interior of the box body 11 has a cavity 111, where the cavity 111 can be used to accommodate one or more battery cells (not shown in the figures). The box body 11 can provide multi-directional dustproof, waterproof, and protective functions for the one or more battery cells accommodated in the cavity 111, reducing the impact of external liquids or other foreign objects on the charging and discharging of the battery cells, and effectively ensuring and extending the lifespan of the battery.

As shown in FIG. 1, the box body 11 has a length direction X, a width direction Y, and a height direction Z. The heat dissipation assembly 12 is provided on at least one side of the box body 11. Specifically, only one heat dissipation assembly 12 may be provided. In this case, the heat dissipation assembly 12 may be provided on one side of the box body 11 in the height direction Z, as shown in FIG. 1; or provided on one side of the box body 11 in the length direction X; or on one side of the box body 11 in the width direction Y. The heat dissipation assemblies 12 may also be provided in plurality. In this case, the plurality of heat dissipation assemblies 12 may be arranged on different sides of the box body 11 respectively.

On the side of the box body 11 where the heat dissipation assembly 12 is provided, the heat dissipation assembly 12 can cooperate with the box body 11 to provide dustproof, waterproof, and protective functions for the one or more battery cells accommodated in the cavity 111, reducing the impact of external liquids or other foreign objects on the charge and discharge of the battery cells in cooperation with the box body 11, and effectively ensuring and extending the lifespan of the battery.

It should also be noted that the heat dissipation assembly 12 includes a heat dissipation plate 121 and a heat dissipation fin 122. The heat dissipation plate 121 is arranged inside the cavity 111, so that the heat dissipation plate 121 can come into abutting contact with one or more battery cells accommodated in the cavity 111, facilitating heat exchange between the heat dissipation plate 121 and the battery cells in contact with it. One or more heat dissipation fins 122 are provided. The one or more heat dissipation fins 122 are all arranged on the side of the heat dissipation plate 121 away from the cavity 111, facilitating contact and heat exchange with the air.

The heat dissipation fin 122 and the heat dissipation plate 121 can be connected integrally or separately. When the heat dissipation fin 122 and the heat dissipation plate 121 are connected separately, the separate connection between the heat dissipation fin 122 and the heat dissipation plate 121 may be achieved by manner such as but not limited to welding. The specific connection manner between the heat dissipation fin 122 and the heat dissipation plate 121 is not limited to a sole manner in this embodiment.

The heat dissipation plate 121 and the heat dissipation fin 122 may be made of a same thermally conductive material or different thermally conductive materials, ensuring that both the heat dissipation plate 121 and the heat dissipation fin 122 have thermal conductivity.

The heat dissipation fin 122 intersects with the heat dissipation plate 121, forming an angle between a plate surface of the heat dissipation plate 121 away from the cavity 111 and a side surface of the heat dissipation fin 122 in a thickness direction. This facilitates air circulation through the plate surface of the heat dissipation plate 121 away from the cavity 111 and the side surface of the heat dissipation fin 122 in the thickness direction, thus facilitating the heat dissipation plate 121 and the heat dissipation fin 122, both having thermal conductivity, to transfer and exchange heat from inside the box 10 to the air, achieving reliable heat dissipation.

Specifically, in actual application scenarios, when the battery cells accommodated in the cavity 111 of the box body 11 generate heat during the charge and discharge process, through the abutting contact between the battery cells and the heat dissipation plate 121, the heat generated by the battery cells can be passively transferred to the heat dissipation plate 121 directly, and diffused to the heat dissipation fin 122 via the heat dissipation plate 121. Meanwhile, since air can circulate through the heat dissipation plate 121 and the heat dissipation fin 122, and the heat dissipation plate 121 and the heat dissipation fin 122 can exchange heat with the air over a large area, the heat of the heat dissipation plate 121 and the heat dissipation fin 122 can be transferred and diffused to the air, achieving heat dissipation.

In summary, the box 10 provided by this embodiment of the application can accommodate one or more battery cells through the cavity 111 of the box body 11. When the battery cells accommodated in the cavity 111 generate heat during the charge and discharge process, the heat dissipation plate 121 arranged in the cavity 111 can come into contact with the battery cells so that the heat dissipation plate 121 exchanges heat with the battery cells that it comes into contact with and diffuses heat to the heat dissipation fin 122, thereby greatly increasing the heat exchange area between the box 10 and the air. This facilitates the heat dissipation plate 121 and heat dissipation fin 122 in transferring and diffusing heat into the air. Thus, the heat dissipation performance of the box 10 provided by the embodiments of this application can be effectively ensured and improved. Moreover, the heat dissipation assembly 12 provided by the embodiments of this application, which is designed based on the above structure, will have certain structural strength and rigidity, and will not be easily damaged throughout the lifecycle of the battery, thereby effectively ensuring that the heat dissipation performance of the box 10 can remain stable and reliable throughout the entire lifecycle of the battery.

Referring to FIGs. 1, 2, and 3, in some embodiments of this application, the heat dissipation fins 122 all extend in straight lines. That is, the extension paths of the heat dissipation fins 122 are all straight, and the heat dissipation fins 122 are all straight fins.

The employment of the above solution on the one hand facilitates the processing of the heat dissipation fin 122 and is conducive to simplifying and optimizing the overall structural design of the heat dissipation fin 122 and the heat dissipation plate 121; on the other hand, the straight sides of the heat dissipation fin 122 can guide the air to flow smoothly along them, thereby facilitating reliable and effective heat exchange between the straight sides of the heat dissipation fin 122 and the air, which helps ensure and improve the heat dissipation performance of the heat dissipation assembly 12 and the box 10.

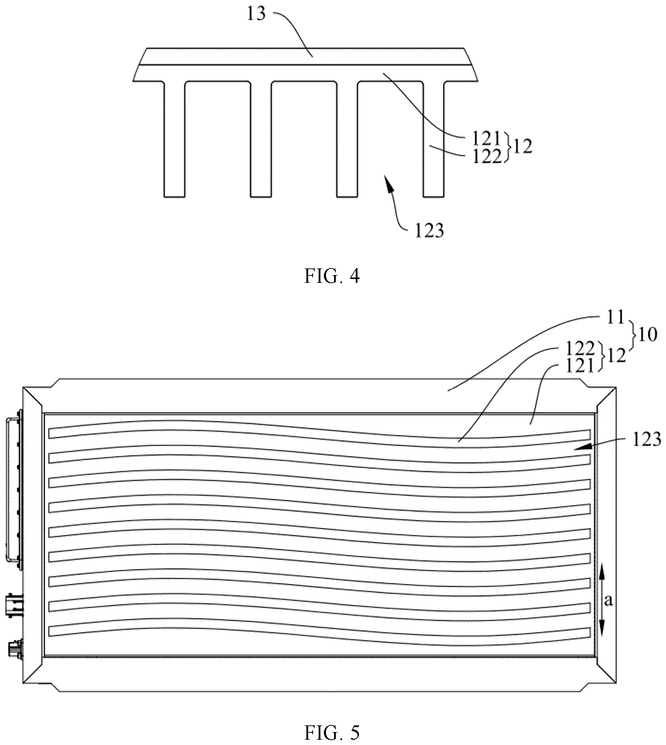

Referring to FIG. 5, in some embodiments of this application, the heat dissipation fins 122 extend in curved lines. That is, the extension paths of the heat dissipation fins 122 are all curved lines, for example, wavy lines.

The employment of the above solution on the one hand facilitates the diversification of the shape of the heat dissipation fin 122 and helps enrich and diversify the overall structural design of the heat dissipation fin 122 and the heat dissipation plate 121; on the other hand, the curved sides of the heat dissipation fin 122 can create a certain turbulence effect on the air flowing through it, thereby relatively reducing the speed of the flow of the air when it passes through the heat dissipation fin 122 and relatively increasing the residence time of the air when it passes through the heat dissipation fin 122, thus facilitating sufficient and reliable heat exchange between the heat dissipation fin 122 and the air, which helps ensure and improve the heat dissipation performance of the heat dissipation assembly 12 and the box 10.

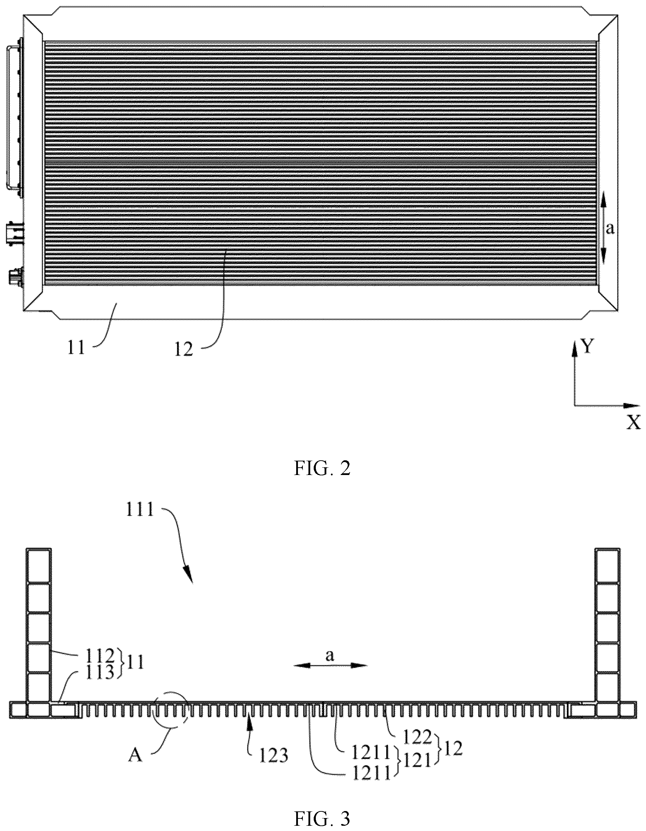

Referring to FIGs. 2, 3, and 4, in some embodiments of this application, the heat dissipation fins 122 are provided in plurality, and the plurality of heat dissipation fins 122 are spaced apart along a first direction a, forming a heat dissipation channel 123 between two adjacent heat dissipation fins 122.

It should be noted that two or more heat dissipation fins 122 are provided. The plurality of heat dissipation fins 122 are spaced apart in the first direction a, the first direction a being parallel to a surface of the heat dissipation plate 121. The plurality of heat dissipation fins 122 may be arranged parallel to each other, that is, in an extension direction of the heat dissipation fins 122, a distance between two adjacent heat dissipation fins 122 is equal at every point. The plurality of heat dissipation fins 122 may also be arranged non-parallel, that is, in the extension direction of the heat dissipation fins 122, a distance between two adjacent heat dissipation fins 122 can vary, for example, it can gradually increase or decrease regularly, or it can vary irregularly. This is not limited in this embodiment. The plurality of heat dissipation fins 122 may be spaced apart at equal intervals in the first direction a, or they may be spaced apart at non-equal intervals in the first direction a. This is not limited in this embodiment.

A gap between two adjacent heat dissipation fins 122 can form a heat dissipation channel 123, the formed heat dissipation channel 123 communicates with the outside in a direction leaving the heat dissipation plate 121 and runs through along the extension direction of the heat dissipation fins 122. This facilitates the flow of air in the heat dissipation channel 123, allowing the heat dissipation plate 121 and the heat dissipation fins 122 to exchange heat with the air flowing through the heat dissipation channel 123.

Therefore, when the above solution is employed, a plurality of heat dissipation fins 122 can be provided on the outer side of the heat dissipation plate 121. Based on this, the heat exchange area between the heat dissipation assembly 12 and the box 10 with the air can be effectively increased. Specifically, a gap between adjacent heat dissipation fins 122 can form a multi-side open heat dissipation channel 123, facilitating air circulation within the heat dissipation channel 123. This allows the heat dissipation plate 121 and the heat dissipation fins 122 to exchange heat with the air flowing through the heat dissipation channel 123, thereby effectively improving the heat dissipation performance of the box 10.

Referring to FIGs. 2, 3, and 4, in some embodiments of this application, the plurality of heat dissipation fins 122 are arranged parallel to each other. That is, in the extension direction of the heat dissipation fins 122, a distance between two adjacent heat dissipation fins 122 is equal at every point.

When the above solution is employed, on the one hand, the layout of the heat dissipation fins 122 on the side of the heat dissipation plate 121 away from the cavity 111 can be effectively balanced and optimized, thereby strengthening the overall structural strength and rigidity of the heat dissipation assembly 12 and optimizing the overall heat dissipation performance of the heat dissipation assembly 12; on the other hand, the width of the heat dissipation channel 123 formed between two adjacent heat dissipation fins 122 can remain basically consistent in the extension direction of the heat dissipation fins 122. Based on this, it can be ensured that when the air flows in the heat dissipation channel 123, any region of the heat dissipation channel 123 will not generate a convergence or divergence effect on the air, thus basically balancing the flow speed of the air when it flows in each region of the heat dissipation channel 123, which helps ensure and balance the heat dissipation performance of the heat dissipation channel 123 and thus helps ensure and improve the heat dissipation performance of the heat dissipation assembly 12 and the box 10.

Referring to FIGs. 2, 3, and 4, in some embodiments of this application, the plurality of heat dissipation fins 122 are spaced apart at equal intervals along the first direction a. Specifically, the plurality of heat dissipation fins 122 are spaced apart along the first direction a, and a gap between any two adjacent heat dissipation fins 122 is the same as a gap between any other two adjacent heat dissipation fins 122.

When the above solution is employed, a gap between any two adjacent heat dissipation fins 122 is the same as a gap between any other two adjacent heat dissipation fins 122, ensuring that a size of a heat dissipation channel 123 formed between any two adjacent heat dissipation fins 122 is basically consistent with a size of a heat dissipation channel 123 formed between any other two adjacent heat dissipation fins 122. Based on this, the airflow conditions in the heat dissipation channels 123 can be relatively balanced, thus relatively balancing the heat exchange effects of the heat dissipation plate 121 regions and the heat dissipation fin 122 regions corresponding to the heat dissipation channels 123, and achieving relatively balanced heat dissipation performance of the regions of the heat dissipation assembly 12. This effectively reduces the risk of heat accumulation in a local region of the heat dissipation assembly 12 due to poor heat dissipation in that region.

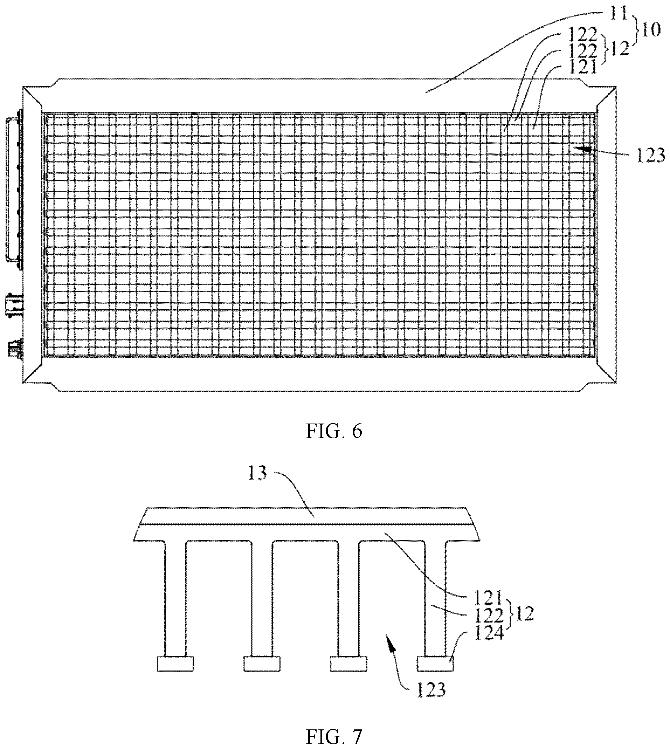

Referring to FIG. 6, in some embodiments, the heat dissipation fins 122 are provided in plurality, and the heat dissipation fins 122 intersect vertically and horizontally to form a plurality of cells, each cell forming a heat dissipation channel 123.

It should be noted that two or more heat dissipation fins 122 are provided. The heat dissipation fins 122 intersect vertically and horizontally to form a mesh structure, with each grid being a cell as described above. The plurality of cells formed by the vertical and horizontal intersections of the heat dissipation fins 122 each can all form a heat dissipation channel 123. The formed heat dissipation channel 123 communicates with the outside in a direction leaving the heat dissipation plate 121, making the heat dissipation channel 123 open on one side, thus facilitating the reciprocating flow of air along the direction approaching the heat dissipation plate 121 and the direction leaving the heat dissipation plate 121 in the heat dissipation channel 123, and facilitating the heat dissipation plate 121 and the heat dissipation fins 122 to exchange heat with the air flowing through the heat dissipation channel 123.

Therefore, when the above solution is employed, on the one hand, mutual connection and support of the heat dissipation fins 122 can be implemented by enabling the heat dissipation fins 122 to intersect vertically and horizontally, which can effectively strengthen the overall structural strength and rigidity of the heat dissipation assembly 12, thereby reducing the risk of damage to the heat dissipation assembly 12 throughout the lifecycle of the battery, and consequently, ensuring and extending the lifespan of the heat dissipation assembly 12 and ensuring stable and reliable heat dissipation performance of the box 10 throughout the lifecycle of the battery; on the other hand, the plurality of cells formed by the vertical and horizontal intersections of the heat dissipation fins 122 each create a single-side open heat dissipation channel 123, which greatly increases the heat exchange area between the heat dissipation fins 122 and the air, thereby facilitating heat exchange between the heat dissipation plate 121 and heat dissipation fins 122 and the air flowing in the heat dissipation channels 123, and effectively ensuring and improving the heat dissipation performance of the box 10.

Referring to FIGs. 1, 3, and 4, in some embodiments of this application, a surface of the heat dissipation plate 121 on the side close to the cavity 111 is provided with a thermally conductive adhesive 13. Specifically, the surface of the heat dissipation plate 121 on the side close to the cavity 111 is coated with the thermally conductive adhesive 13. The specific material of the thermally conductive adhesive 13 is not limited to a sole material in this embodiment.

When the above solution is employed, the surface of the heat dissipation plate 121 on the side close to the cavity 111 can come into abutting contact with the battery cells accommodated in the cavity 111 through the thermally conductive adhesive 13. Based on this, when the battery cells accommodated in the cavity 111 generate heat during the charge and discharge process, the thermally conductive adhesive 13 in abutting contact with the battery cells can efficiently and reliably conduct the heat generated by the battery cells to the heat dissipation plate 121, thereby improving the heat transfer efficiency. Thus, the heat dissipation performance of the box 10 can be effectively ensured and improved.

Referring to FIGs. 3 and 4, in some embodiments of this application, the heat dissipation fins 122 are formed by extrusion molding.

When the above solution is employed, the heat dissipation fins 122 can be formed through extrusion molding, ensuring and improving the processing convenience and processing efficiency of the heat dissipation fins 122, as well as helping to reduce the processing costs of the heat dissipation fins 122.

Referring to FIG. 3, in some embodiments of this application, the heat dissipation plate 121 includes a plurality of heat dissipation sub-plates 1211, the heat dissipation sub-plates 1211 are arranged in a matrix and interconnected to form the heat dissipation plate 121.

It should be noted that at least two heat dissipation sub-plates 1211 are provided. Through the arrangement of the plurality of heat dissipation sub-plates 1211 in a matrix and the connection of abutting edges of adjacent heat dissipation sub-plates 1211, a desired shape of heat dissipation plate 121 can be conveniently and quickly assembled. The specific connection manner used between adjacent heat dissipation sub-plates 1211 is not limited in this embodiment temporarily.

When the above solution is employed, the heat dissipation sub-plates 1211 each can be individually formed, then the heat dissipation sub-plates 1211 can be arranged in a matrix in a desired shape, and then the abutting edges between adjacent heat dissipation sub-plates 1211 can be connected, thereby conveniently and quickly assembling and forming the heat dissipation plate 121 in the desired shape. Thus, the processing convenience and processing efficiency of the heat dissipation plate 121 can be effectively ensured and improved, especially suitable for the processing and forming of large heat dissipation plates 121.

Of course, in other possible embodiments, the heat dissipation plate 121 may be an integral plate structure. This is not limited in this embodiment.

Referring to FIG. 3, in some embodiments of this application, adjacent heat dissipation sub-plates 1211 are connected by welding. For example, adjacent heat dissipation sub-plates 1211 can be stably connected by friction stir welding.

When the above solution is employed, while facilitating the processing and forming of large heat dissipation plates 121, the welding connection between adjacent heat dissipation sub-plates 1211 can relatively ensure and improve the connection stability between adjacent heat dissipation sub-plates 1211, thereby relatively ensuring and improving the overall structural strength and rigidity of the heat dissipation plate 121.

Referring to FIGs. 1 and 3, in some embodiments of this application, the box body 11 includes a first box body 112 and a second box body 113, the second box body 113 is connected to one end of the first box body 112 and intersects with the first box body 112, and the heat dissipation assembly 12 is arranged on a surface of the second box body 113 on a side close to the cavity 111.

It should be noted that the first box body 112 is the main component of the box body 11 and is mainly configured to enclose the cavity 111. The second box body 113 is connected to one end of the first box body 112, and specifically to the end of the first box body 112 where the heat dissipation assembly 12 is to be arranged. The second box body 113 and the first box body 112 may be integrally connected or separately connected. When the second box body 113 and the first box body 112 are separately connected, the connection between the second box body 113 and the first box body 112 may be achieved by manner such as but not limited to welding. The specific connection manner between the second box body 113 and the first box body 112 is not limited to a sole manner in this embodiment.

The second box body 113 is formed by extending toward the cavity 111 relative to the first box body 112, making the second box body 113 intersect with the first box body 112. The second box body 113 can cooperate with the first box body 112 to jointly enclose the cavity 111. The second box body 113 has a surface close to the cavity 111.

The heat dissipation assembly 12 is arranged on the surface of the second box body 113 on the side close to the cavity 111, specifically, the heat dissipation plate 121 of the heat dissipation assembly 12 is arranged on the surface of the second box body 113 on the side close to the cavity 111. A stable connection relation can be established between the surface of the second box body 113 on the side close to the cavity 111 and the heat dissipation plate 121 of the heat dissipation assembly 12. The specific connection manner used between the surface of the second box body 113 on the side close to the cavity 111 and the heat dissipation plate 121 of the heat dissipation assembly 12 is not limited to a sole manner in this embodiment. For example, a stable connection between them can be implemented using friction stir welding.

Based on this, when the above solution is employed, while ensuring the utility of the box body 11, a surface of the second box body 113 close to the cavity 111 can reliably support the heat dissipation assembly 12, even firmly connected to the heat dissipation assembly 12, achieving convenient and quick stabilization of the installation location and installation state of the heat dissipation assembly 12 relative to the box body 11, thereby effectively ensuring and improving the installation convenience and installation reliability of the heat dissipation assembly 12. Moreover, the arrangement of the heat dissipation assembly 12 on the surface of the second box body 113 on the side close to the cavity 111 can further enable the heat dissipation assembly 12, especially the heat dissipation plate 121, to be arranged inside the cavity 111, thereby facilitating the heat dissipation plate 121 to be in abutting contact with one or more battery cells accommodated in the cavity 111 and exchange heat with the battery cells in contact with it.

Referring to FIGs. 1 and 3, in some embodiments of this application, the second box body 113 is perpendicular to the first box body 112.

It should be noted that the second box body 113 is connected to one end of the first box body 112, and extends inward perpendicular to the first box body 112, making the second box body 113 perpendicular to the first box body 112.

When the above solution is employed, the surface of the second box body 113 close to the cavity 111 can be a surface which is flat, level, and perpendicular to the first box body 112. Based on this, the surface of the second box body 113 close to the cavity 111 can make a large-area abutting contact with the heat dissipation assembly 12, providing reliable and effective support for the heat dissipation assembly 12. This can facilitate a stable and secure installation location and installation state of the heat dissipation assembly 12 relative to the box body 11.

Referring to FIGs. 7 and 1, in some embodiments of this application, the heat dissipation assembly 12 further includes a protective strip 124 correspondingly disposed on a side of the heat dissipation fin 122 away from the heat dissipation plate 121, the protective strip 124 intersecting with the heat dissipation fin 122.

It should be noted that the protective strip 124 is connected to the side of the heat dissipation fin 122 away from the heat dissipation plate 121. The protective strip 124 and the heat dissipation fin 122 may be integrally connected or separately connected. When the protective strip 124 and the heat dissipation fin 122 are separately connected, the connection between the protective strip 124 and the heat dissipation fin 122 may be achieved by manner such as but not limited to welding. The specific connection manner between the protective strip 124 and the heat dissipation fin 122 is not limited to a sole manner in this embodiment. The protective strip 124 intersects with the heat dissipation fin 122, and the protective strip 124 and the heat dissipation fin 122 can form a T-shape or an L-shape.

When the above solution is employed, the protective strip 124 can protect the heat dissipation fin 122 accordingly, reducing the risk of direct external impact on the heat dissipation fin 122, thereby effectively reducing the risk of damage to the heat dissipation assembly 12 throughout the lifecycle of the battery, ensuring and extending the lifespan of the heat dissipation assembly 12, and ensuring the stable and reliable heat dissipation performance of the box 10 throughout the lifecycle of the battery.

Referring to FIGs. 7 and 1, in some embodiments of this application, surfaces of the protective strips 124 away from the heat dissipation plate 121 are on the same plane.

It should be noted that each protective strip 124 has a surface close to the heat dissipation plate 121 (that is, the surface connected to the heat dissipation fin 122) and a surface away from the heat dissipation plate 121 (that is, the surface away from the heat dissipation fin 122). The surfaces of all the protective strips 124 away from the heat dissipation plate 121 are flush and flat, on the same plane.

When the above solution is employed, when external objects may come into contact with or even impact the heat dissipation assembly 12, the surfaces of the plurality of protective strips 124 away from the heat dissipation plate 121 can collectively come into contact and support the external objects, achieving a combined protective effect of the plurality of protective strips 124, thereby reliably reducing the risk of external objects directly impacting the heat dissipation fins 122. This reliably reduces the risk of damage to the heat dissipation assembly 12 throughout the lifecycle of the battery, ensuring and extending the lifespan of the heat dissipation assembly 12, and ensuring the stable and reliable heat dissipation performance of the box 10 throughout the lifecycle of the battery.

Especially, when the box 10 is installed and placed in a "heat dissipation assembly 12 facing down" orientation, the surfaces of the protective strips 124 away from the heat dissipation plate 121 can collectively come into contact with the platform, thereby ensuring and enhancing the state stability of the box 10 when it is placed on the platform.

Referring to FIG. 1, some embodiments of this application further provide a battery, where the battery includes the box 10 provided in the embodiments of this application.

It should be noted that the battery is a modular structure that includes one or more battery cells to provide higher voltage and capacity. For example, it may be a battery module, a battery group, or a battery pack. The battery includes one or more battery cells and a box 10 configured to package one or more battery cells. As to the box 10, the box 10 provided in the embodiments of the application is applied.

When the above solution is employed, the battery can use the box 10 provided in the embodiments of the application, ensuring and improving the heat dissipation performance of the battery, thereby effectively ensuring and improving the charge and discharge capacity and safety of the battery.

Referring to FIG. 1, some embodiments of this application further provide an electrical apparatus, where the electrical apparatus includes the above battery.

It should be noted that the electrical apparatus may be a vehicle, a mobile phone, a portable device, a notebook computer, a ship, a spacecraft, an electric toy, an electric tool, or the like. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric vehicle toy, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like. The type of the electrical apparatus is not limited in this embodiment.

When the above solution is employed, the electrical apparatus can use the box 10 or the battery provided by the embodiments of this application to ensure and improve the safety of the electrical apparatus.

The foregoing descriptions are merely embodiments of this application and are not intended to limit this application. For persons skilled in the art, this application may have various changes and variations. Any modification, equivalent replacement, and improvement made without departing from the spirit and principle of this application shall fall within the scope of the claims of this application.

## Claims

1. A box, wherein the box comprises:
a box body, where a cavity is provided inside the box body; and
a heat dissipation assembly, wherein the heat dissipation assembly comprises a heat dissipation plate arranged inside the cavity, and a heat dissipation fin arranged on a side of the heat dissipation plate away from the cavity, the heat dissipation fin intersecting with the heat dissipation plate.

2. The box according to claim 1, wherein the heat dissipation fin extends in a straight line or a curved line.

3. The box according to claim 1 or 2, wherein the heat dissipation fins are provided in plurality, and the plurality of heat dissipation fins are spaced apart along a first direction, forming a heat dissipation channel between two adjacent heat dissipation fins.

4. The box according to claim 3, wherein the plurality of heat dissipation fins are arranged parallel to each other.

5. The box according to claim 4, wherein the plurality of heat dissipation fins are spaced apart at equal intervals along the first direction.

6. The box according to claim 1, wherein the heat dissipation fins are provided in plurality, and the heat dissipation fins intersect vertically and horizontally to form a plurality of cells, each cell forming a heat dissipation channel.

7. The box according to any one of claims 1 to 6, wherein a surface of the heat dissipation plate on a side close to the cavity is provided with a thermally conductive adhesive.

8. The box according to any one of claims 1 to 6, wherein the heat dissipation plate comprises a plurality of heat dissipation sub-plates, the heat dissipation sub-plates are arranged in a matrix and interconnected to form the heat dissipation plate.

9. The box according to claim 8, wherein adjacent heat dissipation sub-plates are connected by welding.

10. The box according to any one of claims 1 to 6, wherein the box body comprises a first box body and a second box body, the second box body is connected to one end of the first box body and intersects with the first box body, and the heat dissipation assembly is arranged on a surface of the second box body on a side close to the cavity.

11. The box according to claim 10, wherein the second box body is perpendicular to the first box body.

12. The box according to any one of claims 1 to 11, wherein the heat dissipation assembly further comprises a protective strip correspondingly disposed on a side of the heat dissipation fin away from the heat dissipation plate, the protective strip intersecting with the heat dissipation fin.

13. The box according to claim 12, wherein surfaces of the protective strips away from the heat dissipation plate are on the same plane.

14. A battery, wherein the battery comprises the box according to any one of claims 1 to 13.

15. An electrical apparatus, wherein the electrical apparatus comprises the box according to any one of claims 1 to 13 or the battery according to claim 14.
